# EUROPEAN PATENT APPLICATION

(11) **EP 1 537 783 A2**
(43) Date of publication of application: **08.06.2005**
(21) Application number: 04257514.2
(22) Date of filing: 03.12.2004
(51) Int. Cl.: A21C 7/01

(54) **Mould guard**

(30) Priority: 03.12.2003 AU 2003906703
(71) Applicant: Moffat Pty Limited, Mulgrave, Victoria 3170 (AU)
(72) Inventor: Willett, Paul Eaton, Narangba, Queensland 4504 (AU)
(74) Representative: Dealtry, Brian

(57) **Abstract**

A moulding machine for shaping mouldable material, comprising at least a pair of moulding or sheeting rollers (1), a housing (10) for the rollers, and a loading means for loading mouldable material to the rollers; the loading means comprising at least one conduit (e) provided with an elbow bend to prevent straight line access from the opening of the conduit to the rollers; the conduit being sized to prevent access of an operator to the moulding rollers through the conduit.

## Description

### Field of the Invention

This invention relates to machines for moulding and shaping of mouldable material such as bread dough and in particular to safety guards and means of safely loading the dough to the machine.

### Background of the Invention

The moulding and shaping of the mouldable material such as bread dough is carried out in machines specifically designed for this purpose and are produced commercially worldwide, while these machines can shape the bread dough into loaf pieces, French sticks or Vienna shaped loaves. Skilled operators can sometimes use the machines to mould small roll size pieces into long bread rolls or buns.

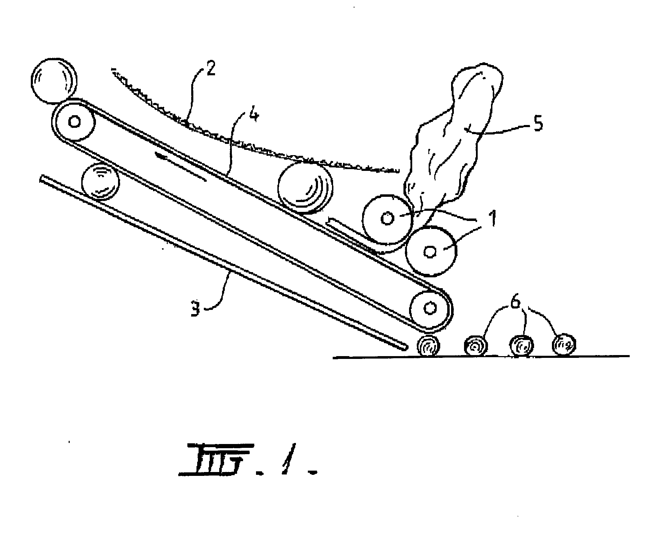

A bread moulder for working dough pieces normally includes a feed chute through which dough pieces are fed manually. These machines have one or more sets of sheeting rollers that are used to sheet out a roundish dough piece into a flat pancake type shape. An illustrative example of these processes involved is shown in Figure 1.

These sheeting rollers press and flatten the dough piece which is fed from them to an arrangement of driven belts. The sheeted out piece then undergoes a number of shaping operations before exiting the machine in a final form.

In such machines, the finished shape of the dough piece can be varied by the combination of the shape of the dough piece prior to sheeting, the method by which the dough piece is fed into the rollers, (i.e. straight on, end on, or at an angle), the gap between the sheeting rollers and the shaping apparatus in the machine.

From an operational safety perspective and for the purpose of providing safe working practices, it is desirable to provide a means to prevent an operator's fingers and hands from entering the sheeting rollers. From an operational point of view, it is preferable that the means employed does not compromise the quality of the products moulded, or slow down the rate of hourly throughput of any product.

### Summary of the Invention

According to the first aspect of the invention, the invention provides a moulding machine for shaping mouldable material, comprising at least a pair of moulding or sheeting rollers, a housing for the rollers, and a loading means for loading mouldable material to the rollers; the loading means comprising at least one conduit provided with an elbow bend to prevent straight line access from the opening of the conduit to the rollers; the conduit being sized to prevent access of an operator to the moulding rollers through the conduit.

According to this aspect of the invention, the pair of moulding or sheeting rollers is mounted on a substantially parallel axis which may be adjusted to close or open the gap between the rollers. The loading means includes at least one conduit which is of a shape and size to prevent access of an operator to the moulding rollers through the conduit. The conduit is generally symmetrical and may be provided with an elbow to prevent straight line access from the opening of the conduit to the sheeting rollers.

Preferably, the conduits are positioned above the nip of the pair of moulding rollers to deliver mouldable material into a region of the moulding rollers. The width of this region of the moulding rollers may be varied by at least one adjustable lateral guide.

In one embodiment of this invention, two or more conduits are provided. The two or more conduits are preferably interchangeable and of varying diameters to allow for different size units of moulding material to be fed through the conduit.

The two or more conduits are preferably mounted on a selector to enable a conduit of appropriate diameter to be positioned above the inlet to the rollers. The selector is preferably a turn table mounted for rotation with the two or more conduits appropriately positioned on the turntable,

In another embodiment of the invention, the loading means to restrict access to the pair of rollers includes at least two trays mounted for rotation about an axis substantially parallel to the axis of the sheeting rollers. The trays may be mounted in a fixed position relative to one another with one of the trays preferably positioned above the rollers to receive a unit of mouldable material. The plurality of trays may be successively loaded with mouldable material whereby rotation of a tray to load material to the rollers rotates the subsequent tray into position for loading with material and thereby restrict access to the rollers.

When receiving the unit of mouldable material, the receiving tray may be in a horizontal position. The tray then rotates physically under the weight of the mouldable material about the axis to allow the material to slide from the tray into the inlet of the rollers. Alternatively, the rotation of the tray may be motor driven and controlled. As the position of the second tray about the pivot axis relative to the first tray is fixed, the rotation of the first tray causes a corresponding rotation of the second tray to block access to said inlet of the sheeting rollers.

In a preferred form of the invention, there are a plurality of trays equally spaced around the axis of rotation to form a paddle wheel configuration. The paddle wheel configuration serves as a loading mechanism for the mouldable material to the rollers. The inlet to the rotters may further be provided with at least a pair of lateral guides which extend Into the nip of the rollers to contain the lateral expansion of the mouldable material as it is being compressed by the rollers. The lateral guides are adjustable axially and/or radially with respect to the axis of the rollers to enable the gaps between the guides and the rollers to be varied depending on the requirement of the moulded product.

In a further embodiment of the invention, a rotatable loading means and at least one conduit loading means, is provided for supply or delivery of mouldable material to the rollers. In this embodiment, at least a pair of lateral guides are provided to define the region at the inlet of the rollers for the loading of mouldable material from the rotating loading means.

At least one conduit loading means is preferably provided adjacent the rotating loading means and mouldable material from the at least one conduit loading means is preferably delivered to a region on the rollers adjacent to the region supplied by the rotating loading means. These two regions are separated by one of the pair of lateral guides,

The conduit loading means may comprise more than one conduits preferably of varying diameters which can be interchangeably moved into a position to deliver mouldable material to the respective region of the rollers.

In a preferred form of this embodiment, two conduit loading means are provided to feed mouldable material to the rollers adjacent to a pair of lateral guides. The region of the rotters supplied by the two conduit loading means is adjacent to the region supplied by the rotary loading means with the regions being separated by the pair of lateral necking guides. Preferably, the region supplied by the rotatable loading means or feeder is centrally positioned between two conduit loading means or feeders.

In a further aspect of the invention, there is provided a moulding machine comprising at least one pair of moulding rollers, a housing for the rollers and a pair of necking side guides extending into the nip of the rollers, the mouldable material being fed to the rollers between the pair of necking side guides.

To enable the Width of the region between the guide of the necking side guides may be adjustable relative to each other. The position of the necking side guides may also be adjustable relative to the rollers to allow for variations in the gap between the rollers.

In a preferred form of this embodiment, the moulding machine may further comprise a rotary loading means for loading mouldable material between the necking side guides. The loading means advantageously restricts access to the rollers from an operator from outside of the housing.

The rotary loading means may include a plurality of trays mounted for rotation about an axis substantially parallel to the axis of the moulding rollers. The axis of rotation of the plurality of trays is preferably positioned above the rollers such that mouldable material placed onto one of the trays is able to slide from the tray as the tray rotates about its rotational axis. The tray preferably receives the mouldable material while in a substantially horizontal position. The mouldable material accordingly slides from the tray into the inlet of the rollers. As one tray rotates about its rotational axis preferably under the weight of the mouldable material, the adjacent tray which is in a fixed orientation relative to its neighbouring trays also rotates blocking further access to the rollers.

In another aspect of the invention, there is provided a loader for supplying mouldable material to a moulding machine, the machine composing at least one pair of moulding on sheeting rollers and a housing for the rollers, the loader supplying mouldable material to the rollers and restricting access to the rollers from outside the housing.

In this aspect, the loader may include at least one conduit which is of a shape and size to prevent access of an operator to the moulding rollers through the conduit. The conduit is generally symmetrical and may be provided with an elbow to prevent straight line access from the opening of the conduit to the sheeting rollers,

Preferably, the conduits are positioned above the nip of the pair of moulding rollers to deliver mouldable material into a region of the moulding rollers. The width of this region of the moulding rollers may be varied by at least one adjustable lateral guide.

In one embodiment of this invention, two or more conduits are provided. The two or more conduits are preferably interchangeable and of varying diameters to allow for different size units of moulding material to be fed through the conduit.

The two or more conduits are preferably mounted on a selector to enable a conduit of appropriate diameter to be positioned above the inlet to the rollers. The selector is preferably a turn table mounted for rotation with the two or more conduits appropriately positioned on the turntable.

In addition to, or alternatively, the loader includes at least two trays mounted for rotation about an axis substantially parallel to the axis of the sheeting rollers. The trays may be mounted in a fixed position relative to one another with one of the trays preferably positioned above the rollers to receive a unit of mouldable material.

When receiving the unit of mouldable material, the receiving tray may be in a horizontal position. The tray then rotates physically under the weight of the mouldable material about the axis to allow the material to slide from the tray into the inlet of the rollers, Alternatively, the rotation of the tray may be motor driven and controlled. As the position of the second tray about the pivot axis relative to the first tray is fixed, the rotation of the first tray causes a corresponding rotation of the second tray to block access to said inlet of the sheeting rollers.

In a preferred form of the invention, there are a plurality of trays equally spaced around the axis of rotation to form a paddle wheel configuration. The paddle wheel configuration serves as a loading mechanism for the mouldable material to the rollers. The inlet to the rollers may further be provided with at least a pair of lateral guides which extend into the nip of the rollers to contain the lateral expansion of the mouldable material as it is being compressed by the rollers. The lateral guides are adjustable axially and/or radially with respect to the axis of the rollers to enable the gaps between the guides and the rollers to be varied depending on the requirement of the moulded product.

The loader may be provided as a retrofit to an existing moulding machine.

### Description of the Preferred Embodiment

Further features, objects and advantages of the present invention will become more apparent from the following description of the preferred embodiment in which:
Figure 1 is a schematic diagram showing the typical operations occurring in a modem combined operational moulding machine;
Figure 2 is a side view showing the loading means to the sheeting rollers; and
Figure 3 is a front view showing the loading means to the machine in accordance with the invention.

The invention will now be described with reference to the mouidable material being a dough for bread products.

A typical moulding machine is shown in Figure 1. Initially a roundish dough piece 5 passes between sheeting rollers 1 to flatten the dough into a flat pancake type of shape, The sheeted out piece then moves on a belt conveyor 4 across a flat chain mail belt 2 referred to as a curling chain which is usually stationary. The flat dough piece curls up as it passes beneath the curling chain after which the dough piece is shaped in a rough but reasonable facsimile of the required shape. The dough is then pressure moulded into a longer smoother shape by passing the dough piece between two counter rotating conveyor belts or between a pressure board 3 and a moving conveyor belt 4 as shown in Figure 1. The distance from the pressure board 3 to belt 4 (or belt to belt), gradually decreases to exert pressure on the dough piece as it passes further down the line under the action of the conveyor belt or belts. To enable different size and shapes of dough to be handled, the distance between the sheeting rollers 1 and the pressure board 3 to belt 4 (or belt to belt) can be adjusted using appropriate means such as a lever or hand wheels. At the end of the finishing board 3, the result is dough 6 of the desired shape and size.

While the method of feeding the dough piece to the sheeting rollers 1 can vary depending on the shape of the dough piece required, the sheeting rollers in a conventional moulding machine are accessible to an operator from outside of the machine, thus presenting a risk that the ends or fingers of the operator may enter the sheeting rolls.

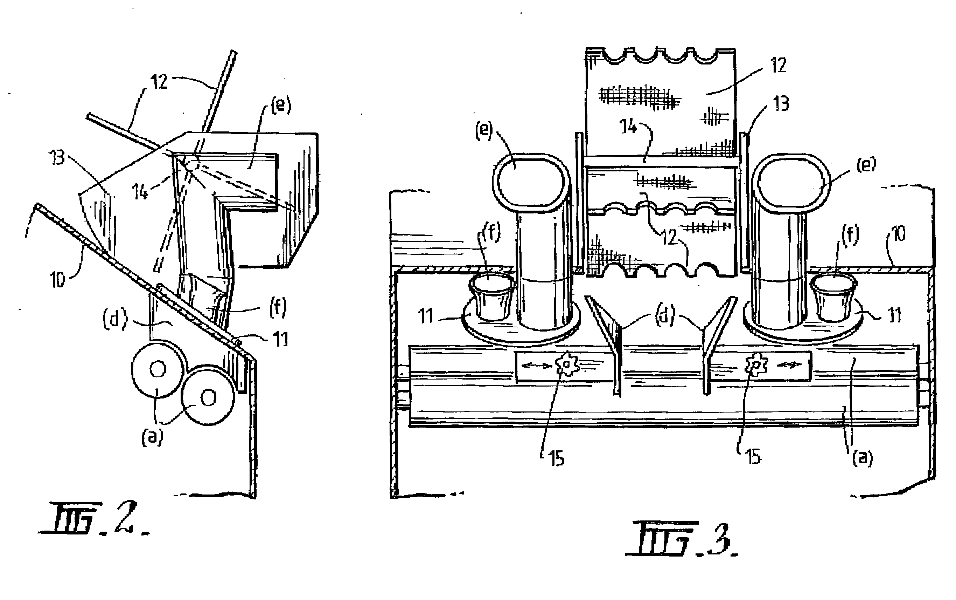

Figure 2 is a side view of an embodiment of the invention. In this embodiment, only the sheeting rollers are shown. The other aspect of the moulding machine may be substantially the same as those illustrated in Figure 1. In an embodiment of the invention, the sheeting rollers which are mounted on substantially parallel axes are enclosed within a housing 10, In the embodiment shown, the rollers are oriented to receive mouldable material through the inlet in the housing 10 from a variety of loading means positioned substantially above the rollers. In use, the nature of the loading means used to feed mouldable material between the rollers will depend on the unit size of the mouldable material. This is particularly relevant where the mouldable material is a bread dough where a dough unit for a loaf is much heavier and larger than a dough unit for making a bread roll or other types of bread product.

The embodiment of the invention shown in Figures 2 and 3, illustrates the different types of loading means. in this embodiment of the invention, one of the loading means includes a plurality of trays 12 mounted to an axle 14 for rotation about an axis which is preferably substantially parallel to the rotational axis of the sheeting rollers, The axle 14 is mounted to a support 13 which in turn is mounted to the housing 10 of the moulding machine. The trays are mounted in a fixed position relative to adjacent trays and are generally formed of a mesh or other materials. In the embodiment shown, the trays 12 are shown as being mounted about the axle 14 roughly at 90° intervals to form a paddle wheel configuration.

The rotation of the paddle wheels is generally indexed so that the trays do not necessarily freely rotate but rest in a position for loading of a mouldable material unit when the trays are in an unloaded state. When a unit of mouldable material is loaded into one of the trays 12, which for loading is generally in a horizontal position, relative to the machine, the weight of the dough or mouldable material, causes the trays to rotate about the axis 14 so that the dough can slide into the inlet of the sheeting rollers, In the preferred embodiment, the region where the dough is loaded, by the rotary loader, into the sheeting rollers (a) is bordered by a pair of adjustable necking guides, (d) which limit the lateral expansion of the dough as it passes into and between the sheeting rollers (a). The adjustable necking guides (d) extend a substantial way into the nip of the rollers and may be adjustable to allow the sheeting rollers (a) to be separated by a greater distance as well as being adjustable in an axial direction along the rollers (a). The lateral position adjustable necking guides (d) on the rollers, are shown in Figure 3 as being adjusted by control knobs 15.

Another form of loading means is the conduit feeders (e), (f) which are shown as being mounted on a turntable 11 to enable the conduits to be interchangeably positioned over the inlet to the sheeting rollers (a). In the case of dough, the sheeting rollers are used where smaller units of dough are needed to make the final product as in the case of shell rolls or long rolls. As shown in Figure 2, conduit (e) is provided with an elbow and is of greater diameter than conduit (f) to allow larger dough units to be inserted without affecting the speed of loading. The large conduit (e) is sized to prevent access by an operator through the conduit to the rollers, An approximate size would be no more than 120 mm diameter and preferably less than 100 mm diameter.

While most operators would be able to insert their arm into the conduit, the presence of the elbow bend would prevent an operator extending his arm through the conduit into the rollers, The smaller conduit (f) would normally be too narrow for arm access and hence would not require an elbow bend.

The region of the sheeting rollers which is supplied by the conduit feeders is bordered by one of the pair of adjustable necking guides and optionally a further lateral guide (not shown). The purpose of the adjustable necking guides (d) is to cause the roundish dough pieces loaded into the inlet of the sheeting rollers to elongate as they pass through the rollers while restricting their lateral expansion. This is known to improve dough piece quality. These guides can be moved together or apart to obtain the best desired result or can be moved laterally along the axis of the rollers to permit full width access of the sheeting rollers to the loading means.

As mentioned above, the central inlet region to the rollers (a) will typically be used for the production of small and large bread loaves which have a typical weight of 250-1000 grams. However the same inlet mouth can be used for moulding French sticks (baguettes) by causing the adjustable necking guides to close up to the required distance. However it has been found that the use of this central inlet region for products such as long bread rolls and laminated rolls (shell rolls) is subject to quality variation and small dough pieces are difficult to feed into the central region.

Hence the applicant has found that the conduit loading means is suitable for roundish dough pieces of approximately 80 grams - 120 grams which are loaded into the inlet of the conduit loaders. This form of feeding dough pieces into the moulding machine is fast, efficient, and because arms, wrists and fingers cannot reach the pinch point of the sheeting rollers, this form of loading is safe for the operation of an operator.

Shell or laminated rolls are typically produced by first moulding a roundish roll into a long roll through a moulding machine. The long rolls can then be fed in lengthways into the sheeting rollers. This requires the operator to put his or her fingers in close proximately to the sheeting rollers. To permit safe and suitable production of these rolls, a smaller diameter and shorter tube (f) is supplied and the end of the long dough piece is simply lowered into each tube.

As the position of both the long roll conduit and the shell roll conduit must be positioned vertically above the rollers pinch point, one embodiment of the invention enables the tubes to be interchangeably rotated into that position,

The applicants contemplate that moulding machines can be produced with either or both the rotating loader and conduit feed to enable production of the desired shapes. Furthermore, as long as the safety requirements of the operator are considered, the applicant considers that the adjustable necking guides can be included on conventional moulding machines.

Those skilled in the art will appreciate that the invention described herein is susceptible to variations and modification other than those specifically described. It is to be understood that the present invention encompasses all such variations and medifications that fall within its spirit and scope.

## Claims

1. A moulding machine for shaping mouldable material, comprising at least a pair of moulding or sheeting rollers, a housing for the rollers, and a loading means for loading mouldable material to the rollers; the loading means comprising at least one conduit provided with an elbow bend to prevent straight line access from the opening of the conduit to the rollers; the conduit being sized to prevent access of an operator to the moulding rollers through the conduit.

2. The moulding machine of claim 1 wherein the at least one conduit is positioned above the nip of the at least one pair of moulding rollers to deliver mouldable material into a region of the moulding rollers, the width of the region of the moulding rollers being varied by at least one adjustable lateral guide to contain the lateral expansion of the mouldable material as is being compressed by the rotters.

3. , The moulding machine of claim 1 or 2 wherein at least two conduits of different diameters are provided.

4. The moulding machine of claim 3 wherein the at least two conduits of different diameters are mounted on a selector to enable a conduit of appropriate diameter to be positioned above the inlet of the rollers.

5. The moulding machine of claim 4 wherein the selector is a turntable mounted for rotation, one of the at least two conduits being selectively positionable above the rollers by rotation of the turntable.

6. The moulding machine of claim 2 wherein a second loader to the rollers is provided, the second loader comprising at least two trays mounted in a fixed position relative to one another, the at least two trays being mounted for rotation about an axis substantially parallel to the axis of the sheeting rollers,

7. The moulding machine of claim 6 wherein the second loader allows mouldable material to be loaded to a second region on the rollers, the second region being separated from other regions on the rollers by the adjustable guides which extend into the nip of the niters to contain expansion of the mouldable material as it is being compressed by the rollers.

8. The moulding machine of claim 7 wherein the second loader comprises a plurality of trays spaced in a paddle wheel formation around an axis for rotation substantially parallel to the axis of the rollers.

9. A moulding machine for shaping mouldable material comprising at least a pair of moulding rollers, a housing for the rollers, at least one loading means and at least one adjustable side guide extending into the nip of the rollers, the at least one adjustable lateral guide defining regions on the moulding rollers.

10. The moulding machine of claim 9 wherein the regions on the moulding rollers are each fed by a separate loader, the width of the region being varied by adjusting the position of the at least one adjustable lateral guide with respect to the axis of the rollers.

11. The moulding machine of claim 9 wherein the at least one loading means comprises a conduit loader, the conduit loader having two or more conduits of varying diameters mounted to a turntable selector positioned above the Inlet to the rollers.

12. , The molding machine of claim 11 wherein the turntable selector is mounted for rotation to enable one of the conduits to be selectively positioned above the inlet to the rollers,

13. The moulding machine of claims 9 to 12 wherein a second loader is provided comprising at least two trays mounted for rotation about an axis substantially parallel to the axis of the rollers, the trays being mounted in a fixed position relative to one another with one of the trays being positioned above the rollers to receive a unit of mouldable material.

14. The moulding machine of claim 13 wherein the plurality of trays are equalled spaced around the axis of rotation to form a paddle wheel configuration.

15. A moulding machine for shaping mouldable material comprising
a pair of moulding or sheeting rollers,
a housing for the rollers, and
a loading means for loading mouldable material to the rollers, the loading means composing a plurality of trays for receiving mouldable material and being mounted for rotation about an axis substantially parallel to the axis of the rollers,
the plurality of trays being fixed in position relative to one another about said axis.

16. The moulding machine of claim 15 wherein the plurality of trays are successively loaded with mouldable material, rotation of the tray to load the mouldable material to the rollers rotating the subsequent tray into position.
